# EUROPEAN PATENT APPLICATION

(11) **EP 1 234 655 A1**
(43) Date of publication of application: **28.08.2002**
(21) Application number: 02003454.2
(22) Date of filing: 14.02.2002
(51) Int. Cl.: B29C 71/04

(54) **Plastic object**

(30) Priority: 26.02.2001 JP 2001050096
(71) Applicant: NITTO DENKO CORPORATION, Osaka (JP)
(72) Inventor: Katayama, Shigeru, Ibaraki-shi, Osaka (JP); Horiike, Mika, Ibaraki-shi, Osaka (JP)
(74) Representative: Grünecker, Kinkeldey, Stockmair & Schwanhäusser Anwaltssozietät

(57) **Abstract**

A plastic object having a part whose structure has been modified by irradiation with a laser light having an ultrashort pulse duration of 10⁻¹² second or shorter. The plastic object has a structurally modified part whose structure has been modified by irradiation with a laser light having a pulse duration of 10⁻¹² second or shorter. The laser light having a pulse duration of 10⁻¹² second or shorter may have an irradiation energy of 500 mW or lower. The plastic object may have the structurally modified part in an inner portion thereof. The structurally modified part preferably extends in a direction parallel or perpendicular to the direction of the laser light irradiation.

## Description

### FIELD OF THE INVENTION

The present invention relates to a plastic object. More particularly, the invention relates to a highly functional, high-performance plastic object which has a structurally modified part in any desired inner portion thereof.

### DESCRIPTION OF THE RELATED ART

Recently, there is a growing desire for the impartation of higher functions to surfaces or inner portions of plastic objects (parts). Investigations for satisfying the desire are being made from two angles, i.e., investigations on techniques concerning materials for producing a plastic object which itself is made of a polymer alloy or composite and investigations on techniques concerning processing in which functional portions are incorporated or structural control is conducted according to desired functions. Examples of higher functions or higher performances desired to be imparted to inner portions (bulk) of plastic objects include electrical or optical conductivity, light transmitting or shielding properties, permeability or impermeability to moisture or gases, and the property of responding to or memorizing an external stimulation such as heat, light or stress. For imparting such a wide variety of properties, various technical investigations are being made on both materials and processing. For example, methods (techniques) which have been investigated for forming in a plastic object a part having a structure different from the internal structure of the original plastic include: a method in which phase separation (compositional change), recrystallization (change in density or crystallinity), or a thermal reaction is caused by heating; a method in which molecular orientation (change in the degree of orientation or in optical/mechanical anisotropy) or an electrical/optical change is accelerated by applying a pressure or stress; and a method in which a photoreaction (electrical chemical-bond reaction), photocrosslinking (crosslinking or curing) , photodecomposition (bond cleavage), or the like is caused by light irradiation. Of such methods (techniques), the techniques in which heat, pressure, or the like is applied are mostly used for modifying a plastic object by applying heat or pressure to the whole plastic object, and are unsuitable for use in such a manner that heat or pressure is applied only to a desired position (portion) in a plastic object to form a part having a structure different from that of the other inner parts of the plastic object. In contrast, light is essentially suitable as means to be caused to act on a desired position in a plastic object and has the possibility of contributing to the trend toward a technique of imparting higher functions or performances based on finer structural control.

On the other hand, considerable technical progress is being made in lasers. In particular, pulse duration of pulsed lasers has been reduced considerably from the nanosecond (10⁻⁹ second) order to the picosecond (10⁻¹² second) order. Recently, even a pulsed laser having a pulse duration on the order of femtosecond (10⁻¹⁵ second) has been developed which employs a titanium/sapphire crystal or the like as a laser medium. A laser light having an ultrashort pulse duration of 10⁻¹² second or shorter (e.g., on the order of femtosecond) has properties that are characteristic of ordinary laser lights, such as directivity and spacial/temporal coherence, besides the extremely short pulse duration. The laser light or a laser which emits the light is hence characterized by attaining an exceedingly high electric field intensity per unit time and unit space when the average output is the same. Because of this, an attempt has been made to take advantage of the high electric field intensity by irradiating an inner part of a material with an ultrashort-pulse-duration laser light to form a new structure (induced structure). This technique has been practiced mainly on inorganic glass materials.

Amorphous plastics, which are polymeric materials, have lower glass transition temperatures than inorganic glass materials. This reflects the fact that the polymeric materials have an amorphous structure formed by the three-dimensional entanglement of polymer chains each made up of units unidimensionally bonded through covalent bonds, while the inorganic glass materials have an amorphous structure formed by three-dimensional bonding through covalent bonds. Consequently, in inorganic glass materials, an induced structure is formed only when the materials are irradiated at high irradiation energy. In contrast, in the case of polymeric materials, it is necessary to avoid high energy irradiation because irradiation at a high energy may result in material deterioration.

However, polymeric materials are characterized by low thermal conductivity. Due to the low thermal conductivity, polymeric materials tend to heat up. Namely, polymeric materials are more apt to undergo thermal motion than inorganic glass materials and necessitate a smaller quantity of heat for motion or reactions. There is hence a possibility that an induced structure might be formed at relatively low irradiation energy in polymeric materials than in inorganic glass materials. However, the formation of an induced structure in plastic objects as polymeric materials by irradiation with a laser light having an ultrashort pulse duration of 10⁻¹² second or shorter (e.g., on the order of femtosecond) has not been investigated enthusiastically as compared with that in inorganic glass materials.

### SUMMARY OF THE INVENTION

One object of the invention is to provide a plastic object having a part whose structure has been modified by irradiation with a laser light having an ultrashort pulse duration of 10⁻¹² second or shorter.

Another object of the invention is to provide a plastic object in which any desired inner portion has been modified in structure by irradiation with a laser light having an ultrashort pulse duration of 10⁻¹² second or shorter even though the irradiation was conducted at low energy.

The present inventors made intensive investigations in order to accomplish those objects. As a result, they have found that when a laser light having an ultrashort pulse duration of 10⁻¹² second or shorter is focused on an inner portion of a plastic object, the structure of the plastic object changes in and around the inner portion irradiated with the pulsed laser light. The invention has been completed based on this finding.

The invention provides a plastic object having a structurally modified part whose structure has been modified by irradiation with a laser light having a pulse duration of 10⁻¹² second or shorter.

In the invention, the laser light having a pulse duration of 10⁻¹² second or shorter preferably has an irradiation energy of 500 mW or lower.

The plastic object of the invention preferably has the structurally modified part in an inner portion thereof. The structurally modified part may extend in a direction parallel or perpendicular to the direction of the laser light irradiation. The structurally modified part preferably has a nearly circular or nearly rectangular section perpendicular to the longitudinal direction for the structurally modified part.

In the invention, the structural modification in the structurally modified part may be a structural modification caused by a crosslinking reaction, phase separation or a decomposition reaction.

### BRIEF DESCRIPTION OF THE DRAWINGS

The forgoing and other objects and advantages of the invention will be apparent from the following detailed description and the accompanying drawings, in which:
Fig. 1 is a diagrammatic view illustrating one embodiment of the plastic object according to the invention;
Fig. 2 is a diagrammatic view illustrating another embodiment of the plastic object according to the invention;
Fig. 3(a) is a diagrammatic sectional view showing the shape of a section of the plastic object 1 illustrated in Fig. 1, the section being perpendicular to the longitudinal direction for the structurally modified part of the object; and
Fig. 3(b) is a diagrammatic sectional view showing the shape of a section of the plastic object 11 illustrated in Fig. 2, the section being perpendicular to the longitudinal direction for the structurally modified part of the object.

### DETAILED DESCRIPTION OF THE INVENTION

The invention will be explained below in detail by reference, according to need, to the drawings, in which like members or parts are often designated by like numerals.

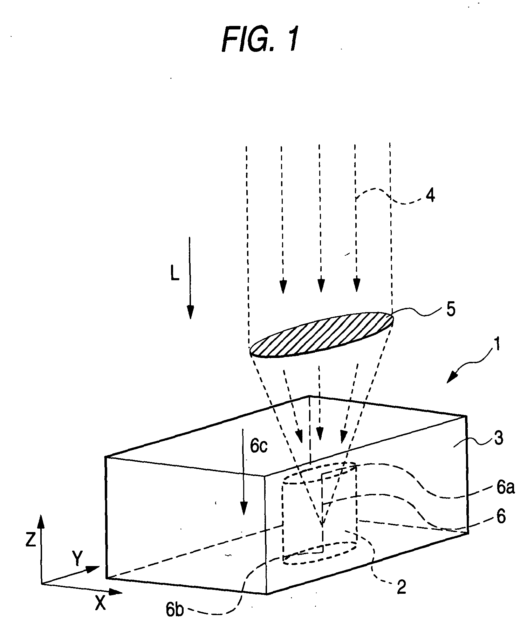

Fig. 1 is a diagrammatic view illustrating one embodiment of the plastic object of the invention. In Fig. 1, numeral 1 denotes a plastic object, 2 a structurally modified part, and 3 a structurally unmodified part. Numeral 4 denotes an ultrashort-pulse-duration laser light having a pulse duration of 10⁻¹² second or shorter (hereinafter often referred to simply as "laser light") , L denotes the direction of irradiation with the laser light 4, and numeral 5 denotes a lens. In the plastic object 1, the structurally modified part 2 is a portion whose structure has been modified by the influence of irradiation with the laser light 4. The structurally unmodified part 3 is a portion which has undergone no influence of irradiation with the laser light 4 and has not been structurally modified. It retains the original structure. Namely, the structurally unmodified part 3 retains the original state or form.

The laser light 4 is directed to the plastic object 1 along the direction of irradiation L, i.e., in a direction parallel to the Z axis. The laser light 4 can be focused with the lens 5. The plastic object 1 is nearly tetrahedron, and the upper side thereof is parallel to the X-Y plane and perpendicular to the Z axis.

Symbol 6a indicates the position on which the laser light 4 was focused at the beginning of irradiation or indicates the center of this focus (this position will be often referred to as "irradiation initiation position"). Symbol 6b indicates the position on which the laser light 4 was focused at the ending of irradiation or indicates the center of this focus (this position will be often referred to as "irradiation termination position"). Symbol 6c indicates the direction along which the focus of the laser light 4 or the center thereof (hereinafter often referred to simply as "focus position") traveled from the irradiation initiation position 6a to the irradiation termination position 6b. Numeral 6 denotes a path along which the focus position for the laser light 4 or the focus center traveled (hereinafter often referred to as "focus position path"). Namely, in producing the plastic object shown in Fig. 1, the focus position for the laser light 4 was continuously and linearly moved from the irradiation initiation position 6a to the irradiation termination position 6b in the focus position traveling direction 6c. The path along which the focus position thus traveled is the focus position path 6. The direction 6c in which the focus position traveled along the focus position path 6 is parallel to the direction L of irradiation with the laser light 4 (i.e., parallel to the Z axis in Fig. 1) and is the same as the irradiation direction L.

Specifically, the plastic object 1 is irradiated with the laser light 4 which strikes thereon in the irradiation direction L, whereby the plastic object undergoes a structural modification in and around the focus positions located on the focus position path 6 for the laser light 4. Since this irradiation with the laser light 4 is conducted while continuously moving the focus position, that portion of the plastic object which undergoes a structural modification continuously travels according to the traveling of the focus position. As a result, the plastic object 1 has a structurally modified part 2 comprising a modified portion extending in the traveling direction (hereinafter often referred to as "modified portion"). In the case where the focus position for the laser light 4 is moved from the irradiation initiation position 6a to the irradiation termination position 6b in the traveling direction 6c, a structurally modified part 2 can be formed along the traveling direction 6c as shown in Fig. 1. Consequently, the longitudinal direction for the structurally modified part 2 is equal to the traveling direction 6c.

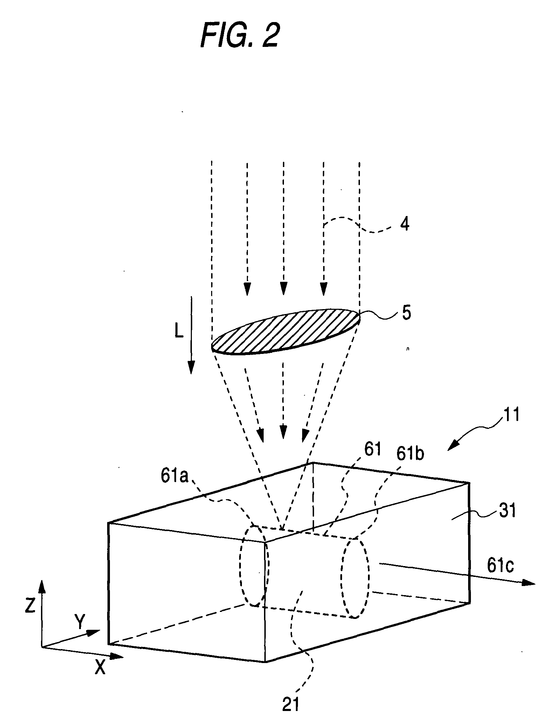

Fig. 2 is a diagrammatic view illustrating another embodiment of the plastic object of the invention. In Fig. 2, numeral 11 denotes a plastic object, 21 a structurally modified part, and 31 a structurally unmodified part. Symbol 61a indicates an irradiation initiation position, 61b an irradiation termination position, and 61c the direction along which the focus position travels from the irradiation initiation position 61a to the irradiation termination position 61b. Numeral 61 denotes a focus position path. Furthermore, numerals 4 and 5 and symbol L have the same meanings as in Fig. 1.

In producing the plastic object shown in Fig. 2, the focus position for the laser light 4 was moved from the irradiation initiation position 61a to the irradiation termination position 61b in the traveling direction 61c (in a direction perpendicular to the irradiation direction L for the laser light 4). The direction of the focus position path 61 is perpendicular to the irradiation direction L for the laser light 4 (i.e., parallel to the X axis in Fig. 2). Specifically, the focus position for the laser light 4 was traveled from the irradiation initiation position 61a to the irradiation termination position 61b in the traveling direction 61c, i.e., in a direction perpendicular to the irradiation direction L for the laser light 4, while keeping the focus position at a constant depth from the upper side of the plastic object 1. As a result, the plastic object 1 has the structurally modified part 21 extending along the traveling direction 61c, i.e., a direction perpendicular to the irradiation direction L for the laser light 4 (i.e., in a direction parallel to the X axis). Consequently, the longitudinal direction for the structurally modified part 21 is equal to the traveling direction 61c.

The structurally unmodified part 31 is a portion which has undergone no influence of irradiation with the laser light 4 and has not been structurally modified (a portion retaining the original state or form).

In the invention, the focus position for the laser light 4 can be moved in a direction parallel or perpendicular to the irradiation direction L for the laser light 4, as in the embodiments described above, or in other directions. By thus moving the focus position, a structurally modified part 2 (or 21) resulting from a structural modification can be formed continuously in the focus position traveling direction. The focus position traveling direction for the laser light 4 (often referred to as "focus traveling direction") is not particularly limited and may be any direction. Examples thereof include a direction parallel to the irradiation direction for the laser light 4 (the same as or opposite the irradiation direction for the laser light 4), directions perpendicular to the irradiation direction, and directions oblique thereto. In particular in the invention, the focus position for the laser light 4 may be linearly moved in one direction, or may be curvedly moved in various directions. Furthermore, in the invention, the focus position for the laser light 4 may be continuously or intermittently moved.

By thus irradiating the plastic object with the laser light 4 while moving the focus position, structurally modified parts of various shapes can be formed. The speed at which the focus position for the laser light 4 is moved (traveling speed) is not particularly limited, and can be suitably selected according to the material of the plastic object 1, the energy of irradiation with the laser light 4, and other factors. It is possible to regulate the size of the structurally modified part by controlling the traveling speed.

The shape (e.g., sectional shape) of the structurally modified part is not particularly limited. With regard to the sectional shape of the structurally modified part, the section may be any of sections perpendicular to the direction of the focus position traveling for the laser light 4 (longitudinal direction), sections perpendicular to the irradiation direction for the laser light 4, sections parallel to the irradiation direction for the laser light 4, and other sections. The term "sectional shape of the structurally modified part" implies, for example, the shape of a section perpendicular to the direction of the focus position traveling for the laser light 4 (longitudinal direction) (hereinafter often referred to as "the shape of a longitudinal-direction-perpendicular section"), the shape of a section perpendicular to the irradiation direction for the laser light 4 (hereinafter often referred to as "the shape of an irradiation-direction-perpendicular section") , or the shape of a section parallel to the irradiation direction for the laser light 4 (hereinafter often referred to as "the shape of an irradiation-direction-parallel section"). Examples of the sectional shape, which depends on the direction of the focus position traveling relative to the laser light irradiation direction, include nearly circular shapes and nearly polygonal shapes (e.g., nearly quadrilateral shapes). The nearly circular shapes may be any shapes which are nearly circular, and examples thereof include the true circle, nearly circular shapes such as ellipses, and analogues of these (e.g., distorted ellipses such as ovoid shapes). In such nearly circular shapes, the periphery may have recesses and protrusions, such as a wavy line or jagged line. The nearly polygonal shapes may be any shapes which are nearly polygonal, and examples thereof include nearly quadrilateral shapes, nearly hexagonal shapes, and nearly octagonal shapes. Examples of the nearly quadrilateral shapes include the square, rectangular shapes, trapezoidal shapes, quadrilateral shapes in which each side is not parallel to the opposite side, and analogues of these (e.g., distorted quadrilateral shapes) . In such a nearly polygonal shape, the vertices may be rounded or not, and the angles may have different shapes. The measures of the angles (measures of the interior angles) in the nearly polygonal shapes are not particularly limited. For example, in the case of a nearly quadrilateral shape, each angle may be a right angle or an acute or obtuse angle. In nearly polygonal shapes (e.g., nearly quadrilateral shapes), the sides each may be linear or may have recesses and protrusions, such as a wavy line or jagged line.

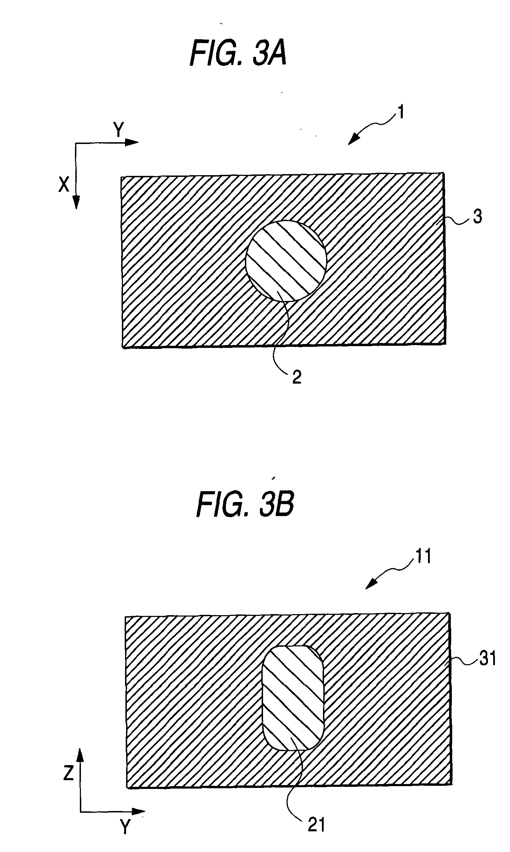

Fig. 3 is diagrammatic sectional views showing the shapes of sections perpendicular to the longitudinal direction. Specifically, Fig. 3(a) is a diagrammatic sectional view showing the shape of a section of the plastic object 1 shown in Fig. 1, the section being perpendicular to the longitudinal direction of the structurally modified part and parallel to the X-Yplane. In Fig. 3(a), the section of the structurally modified part 2, which is a section perpendicular to the longitudinal direction for the structurally modified part 2, has a nearly circular shape. Fig. 3(b) is a diagrammatic sectional view showing the shape of a section of the plastic object 11 shown in Fig. 2, the section being perpendicular to the longitudinal direction for the structurally modified part and parallel to the Z-Y plane. In Fig. 3(b), the section of the structurally modified part 21, which is a section perpendicular to the longitudinal direction for the structurally modified part 21, has a nearly rectangular shape having minor sides and major sides.

In the case where the structurally modified part in the invention has a longitudinal direction-perpendicular section having a nearly elliptic shape or nearly rectangular shape, the ratio between the length Lₛ of the minor axis or a minor side thereof and the length L_{L} of the major axis or a major side thereof is not particularly limited. For example, the ratio L_{L}/L_{S} may be selected in the range of about 1<L_{L}/L_{S}<20 (preferably 1.5<L_{L}/L_{S}<15). For example, when the length L_{S} of the minor axis or minor side is from about 1 to 10 µm, the length L_{L} of the major axis or major side may be from about 10 to 150 µm.

In the invention, sections of the structurally modified part which are perpendicular to the longitudinal direction or parallel to the irradiation direction and other sections thereof may be regulated so as to have various shapes by moving the laser light focus position in a direction perpendicular or oblique to the direction of laser light irradiation.

In the invention, the structurally modified part can be formed so as to have such a state or form that it is constituted of structurally modified sections which each extend in the irradiation direction from the focus position for the ultrashort-pulse-duration laser light or from the irradiation position and which are continuously arranged along the focus position traveling direction (longitudinal direction). For example, when the focus position is moved in a direction perpendicular to the irradiation direction, then the resulting structurally modified part has a longitudinal-direction-perpendicular section having such a nearly elliptic or nearly rectangular shape that the section extends or spreads in the irradiation direction from the focus position (as the upper end) . Namely, the structurally modified part thus formed has such longitudinal-direction-perpendicular sections throughout its length, which is parallel to the focus traveling direction (longitudinal direction).

In the invention, the structurally modified part formed extends continuously in the focus traveling direction according to the traveling of the laser light focus position. The focus position traveling direction is hence the longitudinal direction. Consequently, the longitudinal-direction length of the structurally modified part can be regulated, for example, by regulating the distance over which the laser light focus position is moved. For example, in the case where the laser light focus position is linearly moved, the length of the resulting structurally modified part as measured in the focus traveling direction is equal to or almost equal to the traveling distance over which the laser light focus position was moved.

In the structurally modified part in the invention, the degree of structural modification may be uniform or ununiform. Namely, the structurally modified part may have a constitution in which the degree of structural modification is even, or have a constitution in which the degree of structural modification changes gradually and continuously from the periphery thereof in contact with the structurally unmodified part toward an inner part or toward the focus position or its center. Consequently, the interface (or boundary) between the structurally modified part and the structurally unmodified part may be clear or unclear.

In the invention, the laser light focus position can be moved curvedly (e.g., spirally), and a structurally modified part which as a whole has any of various shapes can be formed. In this case, the longitudinal-direction length of the structurally modified part as a whole, the shape and size of a section thereof perpendicular to the longitudinal direction, etc., are not particularly limited, and correspond to the curved traveling path.

In the invention, the number of structurally modified parts per plastic object is not particularly limited, and may be one or more. In a plastic object containing two or more structurally modified parts therein, it may have a structure in which the structurally modified parts are stacked so as to be apart from each other at an appropriate distance. In a plastic object having two or more structurally modified parts, the distance between the structurally modified parts can be freely selected but is preferably 5 µm or larger. If a plastic object containing structurally modified parts the distance between which is smaller than 5 µm is to be produced, there are cases where the structurally modified parts are fused to one another during the formation thereof, making it impossible to give independent structurally modified parts.

In the invention, the size and shape of a structurally modified part and the degree of structural modification can be suitably regulated by controlling the period of laser light irradiation, direction and speed of the traveling of the laser light focus position, kind of the material of the plastic object, pulse duration of a laser light and intensity of laser light irradiation, numerical aperture of a lens for regulating the laser light focus, and other factors.

The structural modification in the structurally modified part is not particularly limited as long as it is a change from the original structure to another structure. It may be a chemical structural change or a physical structural change. Examples of the structural modification include a structural modification caused by thermal fusion and cooling, a structural modification caused by a crosslinking reaction, a structural modification caused by phase separation, and a structural modification caused by a decomposition reaction. Specific examples thereof include: a modification in which a plastic object is melted by irradiation with a laser light and then cooled to thereby undergo a structural change from the original state or form to another state or form (e.g., from an oriented state to a non-oriented state) ; a modification in which a structural change from an uncrosslinked state or form to a crosslinked state or form occurs due to a crosslink reaction; and a modification in which a structural change from a mixed or dissolved state to a phase-separated state occurs due to phase separation. Furthermore, the structural modification may be a modification in which a structural change from an undecomposed state to a decomposed state occurs due to a decomposition reaction. In the invention, the structural modification in the structurally modified part is preferably a structural modification caused by a crosslinking reaction, phase separation, or a decomposition reaction.

The stability of the structurally modified part is determined by the kind of the structural modification. For example, in the case where the structurally modified part is one formed by the aforementioned structural modification caused by thermal fusion and cooling, the structurally modified part tends to have insufficient stability because it is apt to suffer a structural change due to its relaxation behavior. This tendency becomes strong as the glass transition temperature of the plastic material decreases. In the case where the structurally modified part is one formed by a structural modification caused by crosslinking (or curing) , this structurally modified part has relatively high stability. Furthermore, in the case where a structurally modified part is to be formed by a structural modification caused by phase separation, a suitable degree of stability is imparted thereto according to the mechanism of the phase separation, the component separating out by phase separation, etc. Especially when phase separation occurred after crosslinking, this structurally modified part is said to be relatively stable because the structure thereof has been modified by the crosslinking. However, in the case where a component coagulates or segregates during cooling after melting to cause phase separation, the resulting structurally modified part has factors therein which make the part unstable, according to the state during the cooling after melting (e.g., cooling temperature and cooling rate) . Furthermore, in the case where the structurally modified part is one formed by a structural modification caused by decomposition, there is a possibility that the stability of a decomposition product might influence the stability of the structurally modified part.

In the invention, the plastic object has modified properties due to the structural modification. The properties thus modified are not particularly limited. Examples thereof include electrical properties (e.g., withstand voltage, resistivity, and dielectric constant), optical properties (e.g., colorability, light-absorbing property, luminescent property, refractive index, light transmittance, and optical angular deflection), mechanical properties (e.g., strength, elongation, and viscoelasticity), thermal properties (e.g., heat resistance), and physical properties (e.g., solubility, gas permeability, and hygroscopicity).

### Plastic Object

The plastic object is not particularly limited in shape. Although the plastic objects shown in Figs. 1 and 2 are rectangular parallelopipeds, the plastic object of the invention may have any shape. The size thereof also is not particularly limited.

Polymeric materials (e.g., a homopolymer or copolymer) can be used as the plastic object. Specific examples of usable polymeric materials include known polymeric materials such as thermoplastic polymers, thermosetting polymers, and ultraviolet-curable polymers. Such polymeric materials can be used alone or in combination of two or more thereof.

In the invention, the plastic object may be made of a polymeric material (e.g., a homopolymer or copolymer) having a single chemical structure (with respect to monomer units, repeating units, or the like), or may be made of a polymeric material having two or more chemical structures (e.g., a polymer alloy or polymer blend). Such polymeric materials may contain other materials (e.g., inorganic compounds, organic compounds, metals, and other additives). Examples of plastic objects containing such other materials include composite materials comprising a polymeric material containing one or more other materials dispersed therein and layered products having a layer of one or more other materials. Examples of the additives include inorganic particles (e.g., silica) and organic particles (e.g., fine particles of a polymer such as polystyrene).

Examples of the thermoplastic polymers in the above-described polymeric materials include acrylic thermoplastic polymers such as poly((meth)acrylic acid), poly(methacrylic ester)s including poly(methyl methacrylate) and poly(ethyl methacrylate), poly(acrylic ester)s including poly(ethyl acrylate) and poly(butyl acrylate), and acrylic copolymers comprising monomer units derived from at least one acrylic monomer selected from acrylic acid, acrylic esters, methacrylic acid, and methacrylic esters (e.g., copolymers of butyl acrylate and ethyl acrylate and block copolymers made up of a methyl methacrylate homopolymer and a butyl acrylate/ethyl acrylate copolymer); styrene polymers such as polystyrene and copolymers containing at least styrene monomer units (e.g., ABS resins and AS resins) ; polyamides such as nylon-6, nylon-6,6, and nylon-12; polyesters such as poly(ethylene terephthalate), poly(butylene terephthalate), poly(ethylene naphthalate), and poly(butylene naphthalate); olefin polymers such as polyethylene, polypropylene, and copolymers comprising at least monomer units derived from ethylene or propylene; polycarbonates such as bisphenol A polycarbonates; polyethersulfones; polynorbornene; poly(vinyl chloride); poly(vinylidene chloride); poly(vinyl acetate); poly(vinyl alcohol); polyacetals; poly(phenylene ether); and poly(phenylene sulfide). Examples thereof further include thermoplastic elastomers of various kinds such as acrylic thermoplastic elastomers, styrene-based thermoplastic elastomers, polyester type thermoplastic elastomers, polyolefin type thermoplastic elastomers, and polyurethane type thermoplastic elastomers.

Preferred examples of the thermoplastic polymers include acrylic polymers, polycarbonates, polyethersulfones, polyesters such as poly(ethylene terephthalate), and polynorbornene. More preferred are acrylic polymers and polycarbonates.

Examples of the thermosetting polymers include thermosetting polyurethanes, thermosetting polyesters, phenolic resins, melamine resins, and epoxy resins.

In the plastic object, the polymeric material is not particularly limited in molecular weight (e.g., weight average molecular weight) . The polymeric material can have a molecular weight (e.g., weight average molecular weight) suitably selected according to the plastic object to be obtained. The weight average molecular weight of the polymeric material can be selected, for example, in the range of from about 10,000 to 500,000.

A thermoplastic polymer is preferred as the material of the plastic object in the invention. The plastic object made of a thermoplastic polymer (amorphous plastic object) desirably has such thermal properties that the glass transition temperature thereof is not lower than ordinary temperature (e.g., 20°C or higher). The amorphous plastic object preferably has a glass transition temperature of from 20 to 250°C (more preferably from 100 to 200°C). If the amorphous plastic object has a glass transition temperature lower than ordinary temperature, the structure formed is unstable because it changes with time.

The plastic object preferably is highly transparent especially in the visible wavelength region (e.g., from 400 to 800 nm). For example, the plastic object desirably has a transmittance in that region of 10% or higher (preferably 50% or higher, more preferably 85% or higher) . Consequently, it is undesirable to use a colored plastic object or a plastic object containing scattering particles in a large amount which considerably absorb or scatter light in the visible wavelength region. When the plastic object has a transmittance of 10% or higher, a laser light can be focused while preventing the laser light from being attenuated in the sample. Furthermore, the plastic object having a transmittance of 10% or higher is advantageous in that since the internal state of the plastic object can be perceived, it is possible to perceive the irradiation position or focus position for an ultrashort-pulse-duration laser light, the degree of a structural modification, etc. Namely, this plastic object can be effectively irradiated with an ultrashort-pulse-duration laser light.

### Ultrashort-Pulse-Duration Laser Light

In Figs 1 and 2, the ultrashort-pulse-duration laser light 4 has a pulse duration of 10⁻¹² second or shorter. In the invention, the ultrashort-pulse-duration laser light is not particularly limited as long as it has a pulse duration of 10⁻¹² second or shorter. It is, however, preferred to use a pulsed laser light having a pulse duration on the order of 10⁻¹⁵ second. Such pulsed laser lights having a pulse duration on the order of 10⁻¹⁵ second include pulsed laser lights having a pulse duration in the range of from 1x10⁻¹⁵ second to 1x10⁻¹² second. More specifically, suitable ultrashort-pulse-duration laser lights have a pulse duration of about from 10x10⁻¹⁵ second to 500x10⁻¹⁵ second (preferably from 50x10⁻¹⁵ second to 300x10⁻¹⁵ second) .

Ultrashort-pulse-duration laser lights having a pulse duration of 10⁻¹² second or shorter can be obtained by, for example, reproducing and amplifying a laser light emitted by either a laser using a titanium/sapphire crystal as a laser medium or a dye laser.

The ultrashort-pulse-duration laser light preferably has a wavelength, for example, within the visible wavelength region (e.g., from 400 to 800 nm). The frequency of the ultrashort-pulse-duration laser light can be selected, for example, in the range of from 1 Hz to 80 MHz, and is usually from about 10 Hz to 500 kHz.

The average output or irradiation energy for the ultrashort-pulse-duration laser light is not particularly limited, and can be suitably selected according to the desired size of the structurally modified part to be formed, kind of the intended modification, degree of the modification, and others. For example, an average output of 500 mW or lower (e.g., from 1 to 500 mW) can be selected, and the average output is preferably in the range of from about 5 to 300 mW, more preferably in the range of from about 10 to 100 mW. The plastic object has lower thermal conductivity and a lower glass transition temperature than inorganic glass materials as described hereinabove. Because of this, the irradiation energy required for the plastic object to form an excited structure as in inorganic glass materials can be as low as from about 1/10 to 1/100 the irradiation energy required for the inorganic glass materials.

The ultrashort-pulse-duration laser light is not particularly limited in irradiation spot diameter. A suitable irradiation spot diameter can be selected, for example, in the range of from about 0.1 to 10 µm, according to the desired size of the structurally modified part to be formed, kind of the intended modification, degree of the modification, and to the size, numerical aperture, or magnifying power of the lens, etc.

### Lens

The lens 5 is used for focusing rays of the laser light 4. Consequently, there is no need of using a lens when laser light focusing is unnecessary. The lens 5 is not particularly limited in numerical aperture (NA). The numerical aperture of the lens is preferably selected, for example, in the range of from about 0.3 to 0.8. In the case where a lens having a large numerical aperture is used to focus a laser light to a high degree, the irradiation energy per unit volume is relatively high and the resulting structurally modified part can have a longitudinal-direction-perpendicular section having a nearly circular shape extending from the irradiation point (irradiation position) or focus. It should be noted that this irradiation may result in cracks. On the other hand, when a lens having a small numerical aperture is used and a laser light is focused in a low degree, then the irradiation energy per unit volume is relatively low and the resulting structurally modified part can have a longitudinal-direction-perpendicular section having a nearly elliptic shape extending from the irradiation point or focus and having a large major axis/minor axis ratio. In an extreme case, the section can have a nearly rectangular shape. As shown above, the size (diameter) of the focus of the laser light 4 or the degree of focusing is not particularly limited and can be suitably selected according to the numerical aperture of the lens, etc.

The magnifying power of the lens is not particularly limited and can be suitably selected according to the desired size of the structurally modified part to be formed, kind of the modification, degree of the modification, pulse duration and irradiation energy of the ultrashort-pulse-duration laser light, distance between the laser emitting the laser light 4 and the plastic object, etc. The magnifying power of the lens can be selected, for example, in the range of from about 3 to 100 diameters (preferably from 10 to 50 diameters). For example, when a lens having a magnifying power lower than about 15 diameters is used, it is possible to control the irradiation so as to form a structurally modified part which has a longitudinal-direction-perpendicular section having a nearly elliptic shape with a large major axis/minor axis ratio or having a nearly rectangular shape. On the other hand, when a lens having a magnifying power higher than about 15 diameters is used, it is possible to control the irradiation so as to form a structurally modified part which has a longitudinal-direction-perpendicular section having a nearly elliptic or another shape.

The material of the lens is not particularly limited, and may be an inorganic glass. The lens is not particularly limited in shape or the like as well as in size and thickness.

### Formation of Structurally Modified Part

In the invention, an ultrashort-pulse-duration laser light having a pulse duration of 10⁻¹² second or shorter is focused with a lens on any desired portion (or position) of a plastic object, and the focus position (or irradiation position) for the ultrashort-pulse-duration laser light is moved, whereby a structurally modified part can be formed in any desired portion, (especially in an inner portion) of the plastic object. Namely, that portion of the plastic object on which the ultrashort-pulse-duration laser light is focused and a portion surrounding that portion receive a high irradiation energy and are modified in structure, resulting in a state or form having a structure different from the original one.

The traveling of the focus position for the ultrashort-pulse-duration laser light can be accomplished by moving the positions of the ultrashort-pulse-duration laser light and the lens relative to the plastic object. For example, the ultrashort-pulse-duration laser light and the lens are moved and/or the plastic object is moved. Specifically, focus position traveling may be conducted, for example, in the following manner. A plastic object (sample to be irradiated) is set on a stage capable of being precisely moved two- or three-dimensional directions. An ultrashort-pulse-duration laser and a lens are fixed so that the laser light can be focused on a part (any desired portion) of the plastic object. The focus position is moved by moving the stage. Thus, a structurally modified part having a desired shape can be formed in any desired portion of the plastic object.

By controlling the speed of moving the stage, direction and time period of the movement, and other factors, the irradiation with the ultrashort-pulse-duration laser light can be conducted in any desired manner so that the focus position continuously travels two- or three-dimensionally.

As described above, in producing the plastic object of the invention, a part having a modified structure (structurally modified part) can be formed in any desired portion (e.g., inner portion) of a plastic object through a simple operation in which an ultrashort-pulse-duration laser light having a pulse duration of 10⁻¹² second or shorter is focused on that portion and the focus position is moved. In addition, the irradiation energy for the ultrashort-pulse-duration laser light may be low.

In particular, exceedingly small structurally modified parts having a diameter or side length of 1 mm or smaller (preferably 500 µm or smaller) can be precisely formed in the invention. For example, a structurally modified part having a nearly elliptic or nearly rectangular section can be precisely formed even when the minor axis or minor side length is 30 µm or smaller (preferably 10 µm or smaller).

In the invention, the plastic object having a structurally modified part may be used by itself as a plastic member or may be used in combination with other members. The plastic object having a structurally modified part may be subjected to a processing treatment such as stretching or shrinking and then optionally to a post-treatment. Furthermore, the plastic object having a structurally modified part may be treated to selectively remove the structurally modified part, and this plastic object in which the region which has been occupied by the structurally modified part is vacant can be used. In this case, the resultant plastic object having the vacant space may be subjected to a post-treatment such as, e.g., a treatment for imparting electrical conductivity by electroless plating or the like, a treatment for imparting hydrophilicity, or a treatment for filling with a second substance. As described above, the plastic object having a structurally modified part can be subjected to any desired processing or treatment.

Since the plastic object of the invention has, in any desired portion thereof, a part (structurally modified part) having a structure different from that of the original plastic object, it can be utilized, for example, as a photofunctional member such as a lightguide or light diffusing/scattering unit, or in a micromachine or microreactor having a precise space or passageway therein, biological apparatus, implantation type artificial organ, or microporous material.

In the invention, a part having a modified structure can be formed in any desired portion of a plastic object through a simple operation in which an ultrashort-pulse-duration laser light having a pulse duration of 10⁻¹² second or shorter is focused on that portion and the focus position is moved. In addition, a structurally modified part which is equal in size or in the degree of modification to structurally modified parts formed in inorganic glass materials can be formed with an irradiation energy which is far lower than the irradiation energy used for the inorganic glass materials.

The invention will be explained below in more detail by reference to Examples, but the invention should not be construed as being limited to these Examples.

### EXAMPLE 1

A sample A to be irradiated (a rectangular parallelopiped having a thickness of 0.8 mm) shown below was treated in the following manner. Using a titanium/sapphire femtosecond pulse laser and an objective lens (magnifying power: 10 diameters), the sample A was irradiated from its upper side with an ultrashort-pulse-duration laser light (wavelength, 800 nm; pulse duration, 150x10⁻¹⁵ second; frequency, 200 kHz) focused on a position located at a depth of about 80 µm from the upper surface of the sample A under the conditions of an irradiation energy of 40 mW and an irradiation spot diameter of about 3 µm while moving the sample A in a direction perpendicular to the irradiation direction at a speed of about 500 µm/sec. As a result, a structurally modified part having a structure different from that of the original sample A was formed in the sample A. This structurally modified part extended from the focus position where irradiation with the ultrashort-pulse-duration laser light had been initiated (irradiation initiation position) to the focus position where the irradiation had been terminated (irradiation termination position). Thus, a plastic object having the structurally modified part was obtained. In this structurally modified part, a section thereof obtained by cutting along a plane perpendicular to the focus position traveling direction had a nearly rectangular shape (approximately rectangular shape) . The nearly rectangular shape had a minor-axis length of about 8 µm and a major-axis length of about 150 µm. The nearly rectangular section of the structurally modified part had extended from the irradiation point or focus in the depth direction (irradiation direction).

Sample A to be irradiated: Acrylic copolymer [block copolymer of methyl methacrylate (MMA) with butyl acrylate and ethyl acrylate (BA-EA) ; composition, MMA/BA-EA = 70/30 (ratio in weight average molecular weight) ; glass transition temperatures, about -30°C and 105°C; weight average molecular weight, 83,000]

### EXAMPLE 2

Irradiation with an ultrashort-pulse-duration laser light was conducted in the same manner as in Example 1, except that an objective lens having a magnifying power of 20 diameters was used. As a result, a structurally modified part having a structure different from that of the original sample A was formed in the sample A. This structurally modified part extended from the focus position where irradiation with the ultrashort-pulse-duration laser light had been initiated (irradiation initiation position) to the focus position where the irradiation had been terminated (irradiation termination position). Thus, a plastic object having the structurally modified part was obtained. In this structurally modified part, a section thereof obtained by cutting along a plane perpendicular to the focus position traveling direction had a nearly elliptic shape (approximately elliptic shape). The nearly elliptic shape had a minor-axis length of about 5 µm and a major-axis length of about 40 µm. The nearly elliptic section of the structurally modified part had extended from the irradiation point or focus in the depth direction (irradiation direction) .

### EXAMPLE 3

Irradiation with an ultrashort-pulse-duration laser light was conducted in the same manner as in Example 1, except that the following sample B (a rectangular parallelopiped having a thickness of 0.5 mm) was used as the sample to be irradiated. As a result, a structurally modified part having a structure different from that of the original sample B was formed in the sample B. This structurally modified part extended from the focus position where irradiation with the ultrashort-pulse-duration laser light had been initiated (irradiation initiation position) to the focus position where the irradiation had been terminated (irradiation termination position). Thus, a plastic object having the structurally modified part was obtained. In this structurally modified part, a section thereof obtained by cutting along a plane perpendicular to the focus position traveling direction had a nearly rectangular shape (approximately rectangular shape). The nearly rectangular shape had a minor axis length of about 7 µm and a major axis length of about 120 µm. The nearly rectangular section of the structurally modified part had extended from the irradiation point or focus in the depth direction (irradiation direction) . In the section, several crack points were observed near the irradiation point or focus.

Sample B to be irradiated: Polycarbonate (glass transition temperature: about 160°C; weight average molecular weight: about 150,000)

### COMPARATIVE EXAMPLE 1

Irradiation with an ultrashort-pulse-duration laser light was conducted in the same manner as in Example 1, except that the following sample C (a rectangular parallelopiped having a thickness of about 1 mm) was used as the sample to be irradiated. As a result, an inorganic glass material was obtained which was the sample C in which the inner parts had the same structure as the original one. Namely, no change in internal structure was observed in the sample C.

Sample C to be irradiated: Inorganic glass sheet

### COMPARATIVE EXAMPLE 2

Irradiation with an ultrashort-pulse-duration laser light was conducted in the same manner as in Example 1, except that the sample C was used as the sample to be irradiated and the irradiation energy was changed to 500 mW. As a result, a structurally modified part having a structure different from that of the original sample C was formed in the sample C. This structurally modified part extended from the focus position where irradiation with the ultrashort-pulse-duration laser light had been initiated (irradiation initiation position) to the focus position where the irradiation had been terminated (irradiation termination position). Thus, an inorganic material having the structurally modified part was obtained. In this structurally modified part, a section thereof obtained by cutting along a plane perpendicular to the focus position traveling direction had a nearly rectangular shape (approximately rectangular shape). The nearly rectangular shape had a minor axis length of about 8 µm and a major axis length of about 90 µm. The nearly rectangular section of the structurally modified part had extended from the irradiation point or focus in the depth direction (irradiation direction).

In Examples 1 to 3 and Comparative Examples 1 and 2, an interference microscope (manufactured by Ryoka System Inc.) and a reflection type electron microscope (manufactured by Hitachi Ltd.) were used for examining the state or shape of the surface and section of each of the plastic objects and glass materials.

As demonstrated above, a part (structurally modified part) having a structure different from that of the original plastic object could be formed in the plastic object by utilizing an ultrashort-pulse-duration laser light. In addition, a structurally modified part which is equal in size or in the degree of modification to structurally modified parts formed in inorganic glasses can be formed in a plastic object even when the irradiation energy is far lower than that used for the glasses. Furthermore, the structurally modified part can be precisely formed.

## Claims

1. A plastic object having a structurally modified part whose structure has been modified by irradiation with a laser light having a pulse duration of 10⁻¹² second or shorter .

2. The plastic object of claim 1, wherein the laser light having a pulse duration of 10⁻¹² second or shorter has an irradiation energy of 500 mW or lower.

3. The plastic object of claim 1, which has the structurally modified part in an inner portion thereof.

4. The plastic object of claim 1, wherein the structurally modified part extends in a direction parallel or perpendicular to the direction of the laser light irradiation.

5. The plastic object of claim 4, wherein the structurally modified part has a nearly circular or nearly rectangular section perpendicular to the longitudinal direction for the structurally modified part.

6. The plastic object of claim 1, wherein the structural modification in the structurally modified part is a structural modification caused by a crosslinking reaction, phase separation or a decomposition reaction.
